# DEMANDE DE BREVET EUROPEEN

(11) **EP 1 688 682 A1**
(43) Date de publication de la demande: **09.08.2006**
(21) Numéro de dépôt: 06100221.8
(22) Date de dépôt: 10.01.2006
(51) Int. Cl.: F24H 8/00, F28D 21/00, F28F 1/12, F28F 21/08, F24H 1/40

(54) **Corps de chauffe pour chaudière à condensation**

(30) Priorité: 10.01.2005 ES 200500032
(71) Demandeur: VERGARA URANGA, JOSE MARIA, 489050 ERANDIO-BIZKAIA (ES)
(72) Inventeur: VERGARA URANGA, JOSE MARIA, 489050 ERANDIO-BIZKAIA (ES)
(74) Mandataire: Intes, Didier Gérard André

(57) **Abrégé**

Corps de chauffe pour chaudière à condensation, dans lequel les modules à haute température (5) et condensateur (6) sont en cuivre ou cuivre allié et sont formés de, au moins, deux couches de rangées de tuyaux à haute température (7) et tuyaux de condensateur (8), dans lequel, au moins, ceux tuyaux de condensateur (8) comportent un revêtement anticorrosion, tous les tuyaux à haute température (7) et tuyaux de condensateur (8) comportant une section elliptique ayant ses bords orientés dans la direction de circulation des fumées de la combustion (4), les tuyaux à haute température (7) sont alignés avec les tuyaux de condensateur (8) selon la direction de circulation des fumées de la combustion (4), chaque paire de tuyaux à haute température (7) et tuyaux de condensateur (8) contigus étant mutuellement solidaires au moyen d'ailettes obliques (10) qui sont soudées à ceux-ci et qui sont des tronçons en zigzag d'un élément laminaire plié sous forme de soufflet (9), dont les ailettes obliques (10) et tuyaux à haute température (7) et de condensateur (8) sont en un alliage résistant au recuit aux températures de jusqu'à 600° C.

## Description

### DOMAINE DE L'INVENTION

Cette invention concerne une chaudière à condensation de celles que l'on emploie dans des appareils et installations de chauffage et chauffage d'eau, et qui utilisent un brûleur céramique disposé en haut de la chambre de combustion de la chaudière, ainsi qu'un ventilateur soufflant qui oblige les fumées de combustion à circuler vers le bas, ces fumées cédant leur chaleur, pendant leur trajet, à travers un dispositif échangeur de température à l'intérieur duquel passe l'eau à chauffer et qui est constitué de deux étages qui, en rapport avec ladite circulation vers le bas des fumées de combustion, se présentent sous forme d'un module échangeur à haute température, ou module à haute température, qui se trouve plus proche de l'entrée des fumées de combustion, et d'un module échangeur à basse température, ou module condensateur, qui se trouve plus éloigné de ladite entrée des fumées de combustion.

Plus particulièrement, l'invention se rapporte à une conception particulière du dispositif échangeur de température qui permettra des rendements sensibles tout en ayant des dimensions, poids et coûts de fabrication réduits.

### ÉTAT DE LA TECHNIQUE ANTÉRIEURE

Le concept de chaudière à condensation est connu en soi et est basé sur le fait de récupérer la chaleur latente de condensation de l'eau qui se produit lors de la précipitation de l'eau en phase liquide des fumées de combustion lorsque la température de celles-ci descend en dessous du "point de rosée".

Ces chaudières à condensation ont été une alternative aux chaudières classiques qui a permis d'atteindre des rendements de 112 % (en rapport avec le combustible employé PCI = pouvoir calorifique inférieur), face au 90 % que l'on atteignait dans ces dernières dans lesquelles ont ne récupérait que la propre chaleur de la combustion, et ceci seulement en partie, et afin d'éviter la condensation de l'eau générée dans les fumées de la combustion, ces fumées quittaient la chaudière à des températures au-dessus de 100° C, c'est-à-dire avec une quantité importante de chaleur résiduelle perdue par rapport au but recherché de chauffage de l'eau.

La raison pour laquelle les chaudières classiques perdent autant de chaleur et, en même temps, un grand problème des chaudières à condensation actuelles réside dans la corrosion résultant de la condensation de l'eau des fumées de combustion, laquelle, par combinaison avec des oxydes de soufre et azote existant dans ces fumées, produit comme résultant de l'acide sulfurique et de l'acide nitrique, connus par son grand pouvoir corrosif.

Le pouvoir corrosif de l'acide sulfurique empêche que l'on puisse employer le cuivre dans la construction de l'échangeur, quoique le cuivre soit, justement, un matériau idéal à cette fin, en raison de sa conductibilité thermique élevée.

Pour cette raison, dans les chaudières à condensation connues, l'échangeur est réalisé en acier inoxydable ou en alliage de grande épaisseur d'aluminium - silicium. Dans les deux cas, la conductibilité thermique est très inférieure à celle du cuivre (de l'ordre de la vingtième partie et la moitié, respectivement), d'où le besoin d'augmenter la taille de l'échangeur jusqu'à des dimensions d'un volume excessif afin d'obtenir des résultats comparables à ceux de celui qui est fabriqué en cuivre ; ce surdimensionnement se traduit en augmentations de poids et coût également importants, ainsi qu'en difficultés concernant la place nécessaire pour son installation. Dans le cas d'employer l'alliage d'aluminium - silicium, on a recours à de grandes épaisseurs de paroi afin qu'elle puisse supporter la corrosion par l'acide sulfurique pendant une période de temps suffisamment longue.

D'un point de vue écologique, les chaudières à condensation sont préférées aux chaudières classiques car, bien qu'elles produisent un rejet résiduaire liquide acide, elles ne rejettent pas dans l'atmosphère des oxydes de soufre et d'azote qui sont à l'origine de pluies acides. En revanche, le résidu acide liquide peut être traité dans des stations d'épuration.

Dans ce domaine est connu en particulier le Brevet Européen EP 1 028 454. Dans celui-ci il est décrit une chaudière à condensation dans laquelle ledit module à haute température est construit en cuivre (Cu), tandis que le module de condensateur est construit en aluminium (Al) ; à cet égard, il faut prendre en compte que l'épaisseur minimum pour le Cu est de 0,8 mm, tandis que pour l'A1 est de 3 mm. Par ailleurs, dans ce Brevet Européen sont employés des tuyaux ronds qui, afin de faciliter l'échange calorifique, sont pourvus d'ailettes discoïdales sur toute leur longueur et qui sont agencés en couches en quinconce.

Il est également connu le Brevet Européen EP 0 178 416, dans lequel il est décrit une chaudière à condensation dans laquelle les modules à haute température et de condensateur sont réalisés en Al et, comme dans le cas précédent, les tuyaux sont ronds, possèdent des ailettes sous forme de disque et sont distribués en couches en quinconce.

### EXPLICATION ET AVANTAGES DE L'INVENTION

Face à cet état des choses, la présente invention propose une chaudière à condensation, dans laquelle lesdits modules à haute température et condensateur sont en cuivre ou en cuivre allié et sont formés par, au moins, des couches de rangées de tuyaux à haute température et de tuyaux de condensateur, où, au moins, ces tuyaux de condensateur comportent un revêtement anticorrosion, tous les tuyaux à haute température et tuyaux de condensateur comportant une section elliptique ayant ses bords orientés dans la direction de circulation des fumées de la combustion, les tuyaux à haute température sont alignés avec les tuyaux de condensateur selon la direction de circulation des fumées de la combustion, chaque paire de tuyaux à haute température et de tuyaux de condensateur contigus étant mutuellement solidaires au moyen d'ailettes obliques qui sont soudées à ceux-ci et qui sont des tronçons en zigzag d'un élément laminaire plié sous forme de soufflet, dont les ailettes obliques et les tuyaux à haute température et de condensateur sont en un alliage résistant au recuit à des températures allant jusqu'à 600° C.

Cette structure préconisée rend possible d'obtenir les rendements élevés propres aux chaudières à condensation tout en évitant les inconvénients de taille, poids, coût et difficulté d'emplacement que présentent les structures connues actuelles de celles-ci.

En effet, le fait de pouvoir employer une structure soudée en Cu ou en Cu allié permet de tirer parti de la grande conductibilité du cuivre en vue de construire un module à haute température qui n'est pas soumis à des problèmes de corrosion, car la température de sortie de celui-ci est toujours bien au-dessus du point de rosée ; et, d'autre part, on récupère également la chaleur latente de condensation dans un étage spécifiquement confié au module condensateur et se réalisant déjà dans l'environnement de températures du changement d'état (condensation de l'eau), c'est-à-dire, lorsque les fumées de combustion ont cédé la plupart de leur chaleur (de manière comparable à une chaudière classique).

Pour les mêmes gammes de températures (initiale et finale) des fumées de combustion et de débit d'eau à chauffer, il a été prouvé qu'à l'aide de la chaudière à condensation proposée par cette invention, on obtient un poids et un coût remarquablement inférieurs à ceux des chaudières à condensation connues.

Par ailleurs, le volume de l'appareil est réduit en concordance, étant donné qu'il est directement lié aux dimensions du dispositif échangeur ; d'où l'amélioration sensible de sa capacité à être situé dans l'installation.

En ce qui concerne l'aspect écologique, cette solution proposée est aussi satisfaisante que les chaudières à condensation connues ; c'est-à-dire, elle produit un résidu liquide acide destiné aux stations d'épuration, et elle rejette dans l'atmosphère des gaz dépourvus d'oxydes de soufre, azote et carbone.

En ce qui concerne les tuyaux à haute température et condensateur, cette invention envisage comme particularité que lesdits tuyaux à haute température et de condensateur forment des bosses sphériques sur leur face interne. De même que celle-ci envisage comme particularité que les parois des soufflets laminaires comportent une série de déflecteurs qui sont estampés, qui font saillie en alternance sur l'un et l'autre flanc de celles-ci. Le tout étant destiné à favoriser un échange de chaleur rapide et efficace : les bosses sphériques générant des turbulences dans la circulation de l'eau qui ralentissent l'avancement de la veine de liquide ; et les déflecteurs parce qu'ils produisent le même effet dans la circulation des fumées, en empêchant que la veine de fluide soit laminée (lignes d'écoulement parallèles) et que son avancement soit excessivement rapide, et en produisant en revanche des écoulements transversaux à travers les ailettes qui génèrent des turbulences et rendent plus lent l'avancement des fumées, prolongeant le temps disponible pour le processus d'échange de chaleur.

Celles-ci et d'autres particularités proposées par la présente invention sont illustrées dans la description détaillée qui suit.

### DESSINS ET RÉFÉRENCES

Afin de mieux comprendre la nature de la présente invention, dans les dessins annexés est représenté un mode de réalisation industrielle préféré, seulement à titre d'exemple illustratif et non limitatif.

La figure 1 est une vue en coupe illustrant de manière simplifiée la structure d'une chaudière à condensation selon l'invention. À cette figure est incorporé un détail agrandi qui inclut la représentation du corps de chauffe constitué des modules à haute température (5) et condensateur (6), tels qu'ils se présentent dans l'ensemble de la chaudière, ainsi que les vues latérale gauche et en plan supérieur de ce corps de chauffe ; en outre, de ce plan supérieur se détache un détail agrandi qui illustre l'agencement de l'ensemble des tuyaux (7, 8) et les soufflets laminaires (9).

La figure 2 montre un agrandissement du détail II qui se présente entouré à la figure 1.

La figure 3 est une vue agrandie du détail III entouré à la figure 2.

La figure 4 est une vue agrandie du détail IV entouré à la figure 2, vu selon la flèche indiquée dans celui-ci.

La figure 5 est un agrandissement de la coupe V-V indiquée à la figure 4.

La figure 6 est un agrandissement du détail V entouré à la figure 4.

La figure 7 est la vue de la coupe VII-VII indiquée à la figure 6.

La figure 8 est un agrandissement du détail VIII entouré à la figure 4.

La figure 9 est la vue de la coupe IX-IX indiquée à la figure 8.

À ces figures sont indiquées les références suivantes :
1.- Brûleur céramique
2.- Chambre de combustion
3.- Ventilateur soufflant
4.- Fumées de combustion
5.- Module échangeur à haute température
6.- Module échangeur à basse température ou module condensateur
7.- Tuyaux à haute température
8.- Tuyaux de condensateur
9.- Soufflets laminaires
10.- Ailettes obliques des soufflets laminaires (9)
11.- Pointes des soufflets laminaires (9)
12.- Bosses sphériques des tuyaux (7, 8)
13.- Déflecteurs des soufflets laminaires (9)
14.- Mélange combustible
15.- Résidu liquide acide
16.- Gaz résiduels
17.- Entrée d'eau froide
18.- Conduit de communication entre les modules (5) et (6)
19.- Sortie d'eau chaude
20.- Entrée d'air
21.- Entrée de gaz

### EXPOSITION D'UN MODE DE RÉALISATION PRÉFÉRÉ

En rapport avec la figure et les références indiquées ci-dessus, dans le plan annexé est illustré un mode d'exécution préféré d'une chaudière à condensation de celles que l'on emploie dans des appareils et installations de chauffage et chauffage de l'eau, et qui utilisent un brûleur céramique (1) disposé en haut de la chambre de combustion (2) de la chaudière, ainsi qu'un ventilateur soufflant (3) qui oblige les fumées de combustion (4) à circuler vers le bas, dans lequel trajet, elles cèdent leur chaleur à travers un dispositif échangeur de température, à l'intérieur duquel passe l'eau à chauffer et qui est constitué de deux étages qui, en rapport avec ladite circulation vers le bas des fumées de combustion (4), se présentent sous forme d'un module échangeur à haute température, ou module à haute température (5), qui se trouve plus proche de l'entrée des fumées de combustion (4), et d'un module échangeur à basse température, ou module condensateur (6), qui se trouve plus éloigné de ladite entrée des fumées de combustion (4).

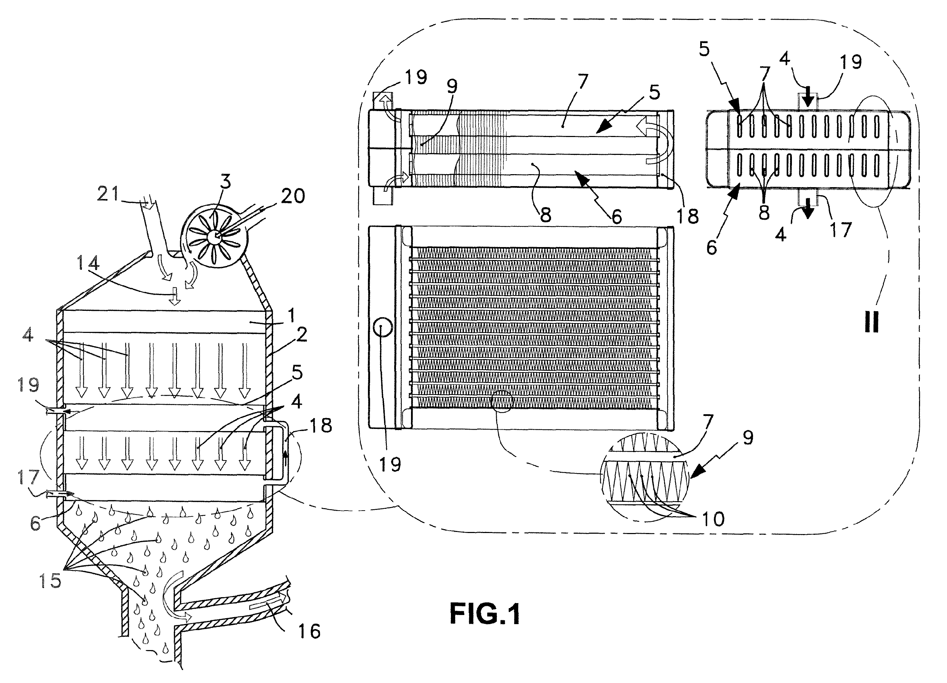

La structure selon l'invention est illustrée à la figure 1, dans laquelle est montré que la chaudière à condensation préconisée répond à une structure dans laquelle lesdits modules à haute température (5) et condensateur (6) sont en cuivre ou cuivre allié et sont formés de, au moins, deux couches de rangées de tuyaux à haute température (7) et tuyaux de condensateur (8), dans laquelle, au moins, ceux tuyaux de condensateur (8) comportent un revêtement anticorrosion, tous les tuyaux à haute température (7) et tuyaux de condensateur (8) comportant une section elliptique ayant ses bords orientés dans la direction de circulation des fumées de la combustion (4), les tuyaux à haute température (7) sont alignés avec les tuyaux de condensateur (8) selon la direction de circulation des fumées de la combustion (4), chaque paire de tuyaux à haute température (7) et tuyaux de condensateur (8) contigus étant mutuellement solidaires au moyen d'ailettes obliques (10) qui sont soudées à ceux-ci et qui sont des tronçons en zigzag d'un élément laminaire plié sous forme de soufflet (9), dont les ailettes obliques (10) et tuyaux à haute température (7) et de condensateur (8) sont en un alliage résistant au recuit aux températures de jusqu'à 600° C.

Comme il est indiqué à la figure 1, le fonctionnement de cette chaudière consiste en ce qu'un tel mélange combustible (7) atteint le brûleur céramique (1) qui garantit une combustion totale produisant des fumées de combustion (4), obligés à circuler vers le bas par l'action du ventilateur soufflant (3) ; ces fumées de combustion (4) à 700° C traversent le module échangeur à haute température (5) et cèdent de la chaleur jusqu'à ce que leur température atteigne quelques 150° C, traversant à cette température le module échangeur à basse température, ou module échangeur (6), dans lequel ces fumées de combustion (4) sont refroidies jusqu'à 60° C, donnant lieu à la condensation de l'eau qui se combine avec les oxydes gazeux de N₂ afin de former le résidu liquide acide (15), récupéré en partie inférieure et envoyé à la station d'épuration d'eau, tandis que le reste des fumées de combustion (4) sont envoyées dans l'atmosphère déjà dépourvues desdits oxydes qui seraient responsables de la pernicieuse pluie acide. En même temps, l'eau effectue le parcours à l'inverse, pénétrant dans le module condensateur (6) à travers l'entrée d'eau froide (17), parcourant ce module condensateur (6), où elle reçoit la chaleur latente de condensation due à la précipitation de l'eau par refroidissement ultérieur des fumées de combustion (4) ; cette eau pénètre, à travers le conduit (18), dans le module échangeur à haute température (5), où elle reçoit le reste de la chaleur et est servie en vue de son usage à travers la sortie d'eau chaude (19).

Contrairement aux solutions connues jusqu'à présent dans ce domaine, les tuyaux à haute température (7) et de condensateur (8) sont en Cu ou Cu allié, ont une section sensiblement elliptique au lieu de ronde, leur agencement est en disposition de rangées par colonnes, au lieu d'en quinconce ; par ailleurs, ces tuyaux (7, 8) incorporent à présent les ailettes obliques (10) qui font partie des soufflets laminaires, au lieu des discoïdales employées par les solutions connues.

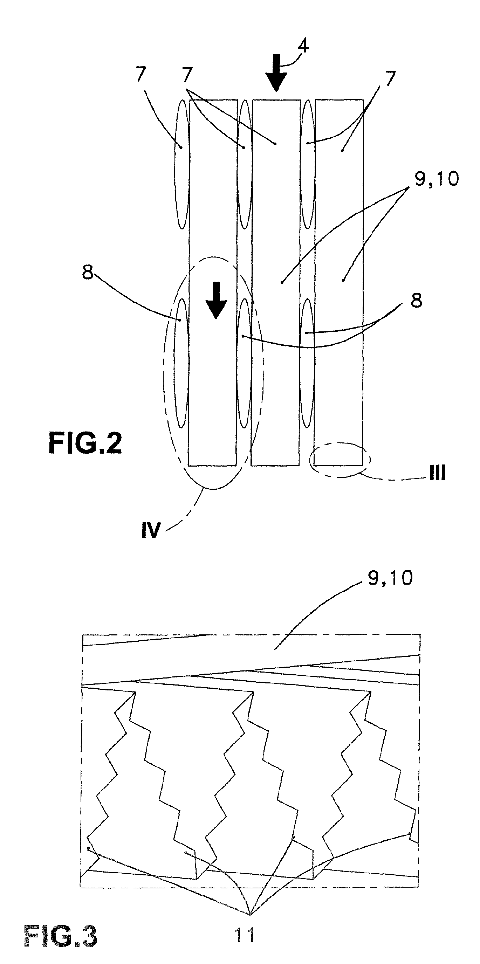

Afin de faciliter la circulation des fumées (4), la présente invention envisage les particularités suivantes : d'une part, lesdites ailettes obliques (10) des soufflets laminaires (9) forment, avec les tuyaux à haute température (7) et de condensateur (8), des triangles dont la base mesure, au moins, 3,3 mm ; d'autre part, les soufflets laminaires (9) se prolongent (figure 2) en dessous de la couche inférieure des tuyaux de condensateur (8), étant considéré un mode d'exécution préféré le fait que ce prolongement soit de, au moins, 3 mm et, en outre, dans ce prolongement (figure 3) les bords inférieurs desdits soufflets laminaires (9) forment des pointes (11) du type en dents de scie.

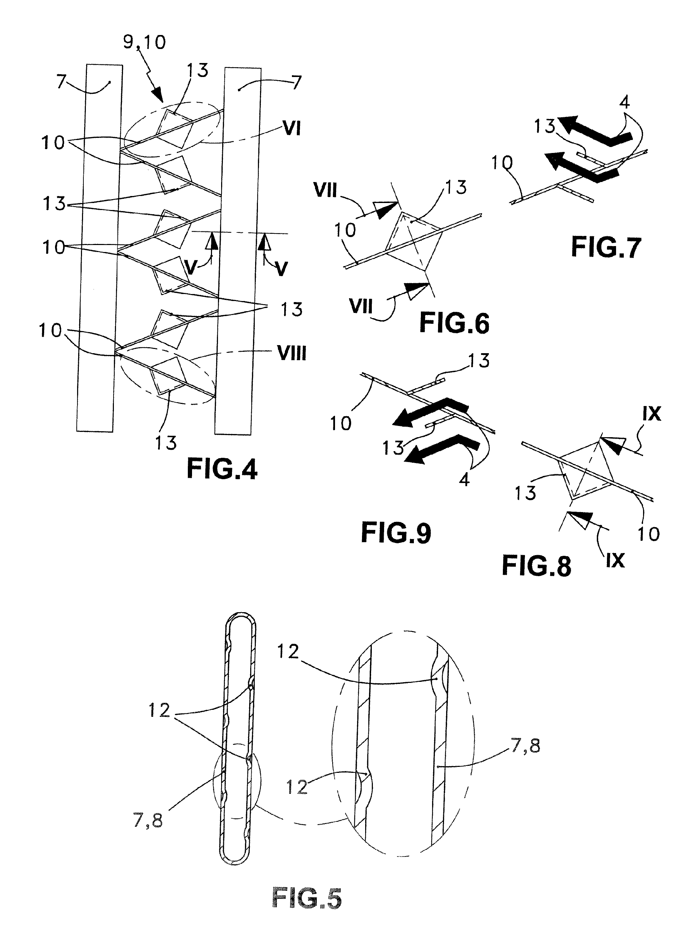

Afin de rendre possible le fait que l'échange de chaleur par unité de temps soit aussi élevé que possible et, de ce fait, également le rendement de la chaudière, conformément à l'invention il existe la particularité que (figure 5) lesdits tuyaux à haute température (7) et de condensateur (8) forment des bosses sphériques (12) sur leur face interne. En outre, les parois des soufflets laminaires (9) comportent une série de déflecteurs (13) qui sont estampés (figures 6 à 9) qui font saillie en alternance sur l'un et l'autre flanc de celles-ci ; et ayant comme particularité que les déflecteurs (13) des ailettes obliques (10) contiguës sont réalisés selon des orientations contraires, comme il ressortira facilement lors d'une comparaison visuelle des figures 6-7 en rapport avec les figures 8-9. Les bosses sphériques (12) comme les déflecteurs (13) génèrent des turbulences et des changements de direction qui ralentissent l'avancement des fumées (4), ce qui donne plus de temps pour l'échange de chaleur ; en outre, ces façonnages obligent la veine de fumées (4) à "lécher" de manière plus ferme la surface des tuyaux (7, 8) et les ailettes obliques (10).

## Revendications

1. Corps de chauffe pour chaudière à condensation, en particulier pour une chaudière de celles que l'on emploie dans des appareils et installations de chauffage et chauffage d'eau, et qui utilisent un brûleur céramique (1) disposé en haut de la chambre de combustion (2) de la chaudière, ainsi qu'un ventilateur soufflant (3) qui oblige les fumées de combustion (4) à circuler vers le bas, ces fumées cédant leur chaleur, pendant leur trajet, à travers un dispositif échangeur de température à l'intérieur duquel passe l'eau à chauffer et qui est constitué de deux étages qui, en rapport avec ladite circulation vers le bas des fumées de combustion (4), se présentent sous forme d'un module échangeur à haute température, ou module à haute température (5), qui se trouve plus proche de l'entrée des fumées de combustion (4), et d'un module échangeur à basse température, ou module condensateur (6), qui se trouve plus éloigné de ladite entrée des fumées de combustion (4), **caractérisé en ce que** lesdits modules à haute température (5) et condensateur (6) sont en cuivre ou cuivre allié et sont formés par, au moins, des couches de rangées de tuyaux à haute température (7) et de tuyaux de condensateur (8), où, au moins, ces tuyaux de condensateur (8) comportent un revêtement anticorrosion, tous les tuyaux à haute température (7) et tuyaux de condensateur (8) comportant une section elliptique ayant ses bords orientés dans la direction de circulation des fumées de la combustion (4), les tuyaux à haute température (7) sont alignés avec les tuyaux de condensateur (8) selon la direction de circulation des fumées de la combustion (4), chaque paire de tuyaux à haute température (7) et de tuyaux de condensateur (8) contigus étant mutuellement solidaires au moyen d'ailettes obliques (10) qui sont soudées à ceux-ci et qui sont des tronçons en zigzag d'un élément laminaire plié sous forme de soufflet (9), dont les ailettes obliques (10) et les tuyaux à haute température (7) et de condensateur (8) sont en un alliage résistant au recuit à des températures allant jusqu'à 600° C.

2. Corps de chauffe pour chaudière à condensation selon la revendication 1, **caractérisé en ce que** lesdites ailettes obliques (10) des soufflets laminaires (9) forment avec les tuyaux à haute température (7) et de condensateur (8) des triangles dont la base mesure, au moins, 3,3 mm.

3. Corps de chauffe pour chaudière à condensation selon les revendications précédentes, **caractérisé en ce que** les soufflets laminaires (9) se prolongent en dessous de la couche inférieure des tuyaux de condensateur (8).

4. Corps de chauffe pour chaudière à condensation selon la revendication 3, **caractérisé en ce que** les soufflets laminaires (9) se prolongent en dessous de la couche inférieure des tuyaux de condensateur (8) d'une longueur de, au moins, 3 mm.

5. Corps de chauffe pour chaudière à condensation selon les revendications précédentes, **caractérisé en ce que** les bords inférieurs desdits soufflets laminaires (9) forment des pointes (11) du type en dents de scie.

6. Corps de chauffe pour chaudière à condensation selon les revendications précédentes, **caractérisé en ce que** lesdits tuyaux à haute température (7) et de condensateur (8) forment des bosses sphériques (12) sur leur face interne.

7. Corps de chauffe pour chaudière à condensation selon les revendications précédentes, **caractérisé en ce que** les parois des soufflets laminaires (9) comportent une série de déflecteurs (13) qui sont estampés et qui font saillie en alternance sur l'un et l'autre flanc de celles-ci.

8. Corps de chauffe pour chaudière à condensation selon la revendication 7, **caractérisé en ce que** les déflecteurs (13) des ailettes obliques (10) contiguës sont réalisés selon des orientations contraires.
